# FASCICULE DE BREVET EUROPEEN

(11) **EP 0 532 469 B1**
(45) Date de publication et mention de la délivrance du brevet: **21.05.1997**
(21) Numéro de dépôt: 92810691.3
(22) Date de dépôt: 10.09.1992
(51) Int. Cl.: G02B 6/30, G02B 6/42, G02B 6/36

(54) **Procédé pour positionner un premier substrat sur un second substrat et dispositif micromécanique de positionnement obtenu**
Verfahren zur Positionierung eines ersten Substrats auf ein zweites und so hergestellte mikromechanische Positioniervorrichtung
Method of positioning a first substrate on a second, and micromechanical positioning device obtained thereby

(30) Priorité: 10.09.1991 CH 2656/91
(43) Date de publication de la demande: 17.03.1993
(73) Titulaire: CENTRE SUISSE D'ELECTRONIQUE ET DE MICROTECHNIQUE S.A., 2007 Neuchâtel (CH)
(72) Inventeur: Parriaux, Olivier, CH-1005 Lausanne (CH); Bergqvist, Johan Wilhelm, CH-2014 Bôle (CH)
(74) Mandataire: Brulliard, Joel

(56) Documents cités:
- EP-A- 0 150 929
- EP-A- 0 419 767
- WO-A-87/04566
- JOURNAL OF THE ELECTROCHEMICAL SOCIETY, vol. 134, no. 11, novembre 1987, pages 2940-2941, Manchester, New Hampshire, US; L. PFEIFFER et al.: "Self-aligned controlled collapse chip connect (SAC4)"
- PROCEEDINGS OF THE SPIE, vol. 803, avril 1987, pages 72-79, Den Haag, NL; D. MÜNCHMEYER et al.: "Accuracy limits and potential applications of the LIGA technique in integrated optics"
- PROCEEDINGS OF THE IEEE, vol. 70, no. 5, mai 1982, pages 420-457, New York, US; K.E. PETERSEN: "Silicon as a mechanical material"

## Description

La présente invention se rapporte aux méthodes et aux dispositifs permettant d'orienter deux substrats quelconques l'un sur l'autre et concerne, plus particulièrement, un procédé pour positionner un premier substrat sur un second substrat et le dispositif micromécanique de positionnement obtenu.

Dans le domaine des dispositifs passifs de positionnement d'éléments pour la micromécanique, outre les performances mécaniques requises, ces dispositifs doivent répondre à des exigences de tailles, de précisions, de simplicité, de coûts et d'entretien.

On connaît déjà un grand nombre de dispositifs utilisés en micromécanique et permettant de résoudre les problèmes de positionnement entre éléments. On peut citer, par exemple, les connecteurs optiques et les commutateurs optiques de plus en plus utilisés dans le domaine des capteurs et des télécommunications, respectivement, et pour lesquels se pose le problème de l'alignement entre éléments optiques.

La demande de brevet EP-A-0419 767 décrit un exemple de positionnement d'un premier substrat en silicium dans un second, également en silicium. Le premier substrat est monté dans une cavité réalisée dans le second, ledit premier substrat et ladite cavité étant réalisés au moyen de procédés lithographiques. Les faces du premier substrat coopèrent avec les parois de la cavité pour assurer à l'ensemble un positonnement défini.

Edmond J. Murphy fait une revue, dans la publication "Fiber Attachment For Guided Wave Devices", Journal of Lightwave Technology, Vol. 6, No. 6, June 1988, pages 862 à 871, de l'état de la technique dans le domaine des méthodes et des dispositifs d'alignement de fibres optiques avec des guides d'ondes optiques intégrés. Ce document décrit, à la page 867 et à la figure 9 (reproduite à la Fig. 1 de la présente demande), une méthode et un dispositif micromécanique de positionnement d'un composant optique intégré plan sur un substrat plan. Le composant optique intégré est en verre ou en LiNb0₃ et comprend au moins un guide d'onde optique intégré et des premiers moyens de positionnement de type mâle. Ces premiers moyens de positionnement comportent au moins une face perpendiculaire au plan du composant optique intégré. Le substrat est en silicium et comprend des seconds moyens de positionnement de type femelle. Les premiers et les seconds moyens de positionnement sont tels qu'ils s'emboîtent les uns dans les autres.

Les six degrés de liberté dont est doté tout corps se déplaçant dans l'espace sont en général définis comme constitués de trois mouvements linéaires le long de trois axes orthogonaux X-X, Y-Y et Z-Z appelés communément mouvements longitudinal (axe X-X), latéral (axe Y-Y) et vertical (axe Z-Z), et de trois mouvements de rotation respectivement autour de ces axes appelés communément mouvements de roulis (axe X-X), de tangage (axe Y-Y) et de lacet (axe Z-Z).

Le procédé de l'art antérieur permet un positionnement automatique et un alignement supprimant quatre degrés de liberté auxdits substrats sur un total de six.

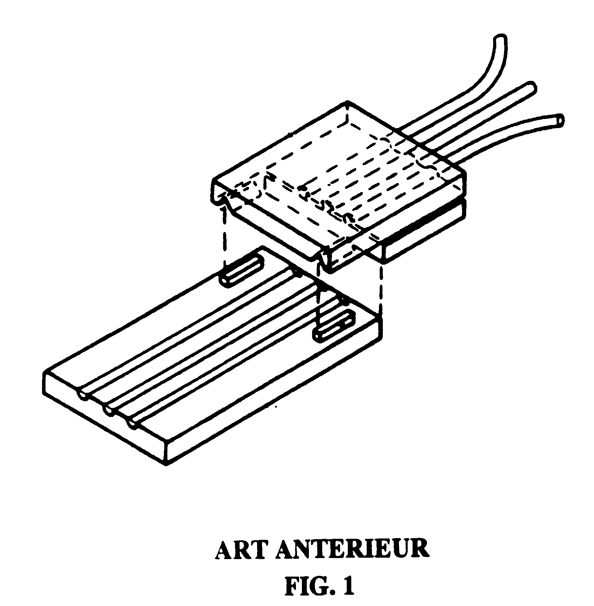

Conformément au procédé de l'art antérieur, le positionnement automatique du composant optique intégré plan sur un substrat plan est obtenu en disposant les moyens de positionnement de type mâle, de section longitudinale rectangulaire, à l'intérieur des moyens de positionnement de type femelle en forme de "V" gravés dans le substrat de silicium. Puis, les deux substrats sont pressés l'un contre l'autre et glissés dans le plan de contact jusqu'à ce que les arêtes des moyens de positionnement de type mâle viennent en butée contre les flancs des moyens de positionnement de type femelle en forme de "V" (cf. Fig. 1).

La publication de E.-J. Murphy, citée ci-dessus, montre comment positionner un composant optique selon une direction transverse et par rapport à un deuxième substrat. Le positionnement longitudinal du premier substrat est obtenu grâce à un troisième substrat fixé au deuxième substrat et venant en butée contre la face latérale de ce premier substrat.

Les inconvénients de ce procédé pour positionner deux substrats l'un sur l'autre et du dispositif obtenu sont cités ci-après.

Les moyens de positionnement de type mâle ont une très faible épaisseur, de l'ordre de 2 micromètres, car réalisés par attaque sèche d'une couche mince déposée sur le substrat du composant optique intégrée. Afin qu'ils puissent jouer leur rôle de butée mécanique, il est nécessaire de presser fortement les deux surfaces en contact, ce qui augmente la force nécessaire au glissement des deux substrats pour arriver en butée.

De plus, la faible largeur des moyens de positionnement de type mâle fait que le contact avec les flancs du "V" se fera à la base de celui-ci, c'est-à-dire là où il est mécaniquement le moins bien défini.

Les surfaces d'appui conjuguées des moyens de positionnement selon l'art antérieur sont données par l'intersection entre les arêtes des moyens de positionnement de type mâle et les flancs respectifs des moyens de positionnement de type femelle. Une telle structure d'une butée mécanique n'est pas judicieuse d'un point de vue mécanique car les arêtes peuvent se briser ou se déformer dans le cas d'un métal. De plus, la précision du positionnement relatif dépendra de l'épaisseur des moyens de positionnement de type mâle et de leur forme, caractéristiques pouvant ne pas être facilement reproductibles.

Le dispositif de l'art antérieur nécessite l'utilisation d'un troisième substrat dont la face latérale en butée avec la face latérale du premier substrat (le composant optique) définit la position longitudinale de ce premier substrat ainsi que sa position angulaire. Ces deux positions sont donc tributaires de la position longitudinale et angulaire du troisième substrat sur le deuxième substrat.

Aussi un but de la présente invention est-il un procédé pour positionner un premier substrat sur un second substrat et un dispositif micromécanique de positionnement ne présentant pas les inconvénients des procédés et des dispositifs de l'art antérieur.

Un autre but de l'invention est d'imposer à l'un des substrats, l'autre substrat étant pris comme référence, une position latérale et verticale unique, et de supprimer tout mouvement de roulis, de tangage et de lacet de ce même substrat vis-à-vis de l'autre.

Les caractéristiques de l'invention sont définies dans les revendications.

Un avantage du procédé pour positionner un premier substrat sur un second substrat et du dispositif micromécanique de positionnement obtenu par le procédé de l'invention est que les moyens de positionnement de type mâle peuvent avoir une épaisseur importante, de l'ordre de 30 à 100 µm. Par conséquent, il n'est pas nécessaire de presser très fortement les deux substrats pour que le rôle de butée mécanique soit joué par les moyens de positionnement de type mâle et femelle. Le glissement entre plans de contact peut ainsi être exécuté sans frottement important.

D'autres avantages de l'invention, du fait que les moyens de positionnement de type femelle ont des faces perpendiculaires au substrat, sont que:
- les surfaces d'appui conjuguées de la butée mécanique sont du type plan sur plan, les conditions d'appui mécanique sont alors meilleures, et
- la précision du positionnenent relatif ne dépend pas de l'épaisseur des moyens de positionnenent de type mâle, ni de la qualité de leurs arêtes.

D'autres objets, caractéristiques et avantages de la présente invention apparaîtront plus clairement à la lecture de la description suivante, description faite à titre purement illustratif et en relation avec les dessins joints dans lesquels:
- La fig. 1: montre un dispositif micromécanique de positionnement d'un composant optique intégré plan sur un substrat plan de l'art antérieur cité ci-dessus.
- La fig. 2: montre le dispositif micromécanique de positionnement obtenu par le procédé de l'invention.
- Les figures 3.a à 3.c: montrent différents modes de réalisation de l'élément essentiel de l'invention que constitue la structure du type "tenon-mortaise".

La présente invention concerne en particulier un procédé pour positionner un premier substrat **2** sur un second substrat **3**, consistant à réaliser des premiers moyens de positionnement **4** sur le premier substrat **2** et à réaliser des seconds moyens de positionnement **5** sur le second substrat **3**.

Le premier substrat est en verre ou en LiNbO₃, ou en tout autre matériau, et comprend des premiers moyens de positionnement **4** de type mâle. Ces premiers moyens de positionnement comportent au moins une face, ci-après appelée surface d'appui **4a**, perpendiculaire à l'une des faces principales dudit premier substrat, ci-après appelée plan de contact. Le second substrat est découpé dans un monocristal de silicium et comprend des seconds moyens de positionnement **5** de type femelle.

Selon le procédé de l'invention, le second substrat **3** est découpé dans un monocristal de silicium de telle manière qu'il présente une surface principale 3a, ci-après appelée plan de contact, qui coincide avec le plan cristallin ayant pour indices de Miller (100). De plus, chaque second moyen de positionnement **5** de type femelle consiste en au moins une mortaise dont au moins une face, ci-après appelée surface d'appui **5a**, est perpendiculaire au plan du second substrat et fait, de préférence, un angle de ± 45° avec l'axe longitudinal X-X de ce second substrat. De plus, les indices de Miller du plan cristallin défini par la surface d'appui **5a** des seconds moyens de positionnement sont (010).

Dans le cas où les seconds moyens de positionnement **5** de type femelle comporteraient une seconde surface d'appui **5b** également perpendiculaire au plan du second substrat, les indices de Miller du plan cristallin défini par cette seconde surface d'appui des seconds moyens de positionnement sont (001), de manière que ces deux surfaces d'appui soient orthogonales entre elles.

De façon moins spécifique que ce qui vient d'être défini ci-dessus, les indices de Miller de la famille de plans cristallins des surfaces d'appui des seconds moyens de positionnement sont {100}.

Toujours selon le procédé de l'invention, chaque premier moyen de positionnement **4** de type mâle consiste en au moins un tenon dont au moins une surface d'appui **4a** perpendiculaire au plan du premier substrat est parallèle à l'une des surfaces d'appui des seconds moyens de positionnement, laquelle surface est perpendiculaire au plan dudit second substrat.

Le premier substrat **2** et le second substrat **3** sont disposés l'un sur l'autre, de manière que leurs plans de contact **2a, 3a** respectifs soient en contact l'un avec l'autre.

Les premier et second moyens de positionnement sont destinés à être engagés les uns dans les autres. Les moyens de positionnement de type femelle ont, avantageusement, des surfaces d'appui dont la profondeur est supérieure à la hauteur des moyens de positionnement de type mâle.

Selon l'invention, les premiers moyens de positionnement **4** de type mâle, à savoir: un ou, de préférence, deux tenons, sont réalisés à l'aide d'une technique de croissance d'une couche métallique sur le premier substrat **2**.

Le ou les tenons réalisés dans le premier substrat sont obtenus à l'aide, par exemple, d'un procédé de croissance galvanique d'un matériau. Ces procédés de l'art antérieur sont utilisés pour la réalisation de microstructures tels, par exemple, des roues dentées de faible dimension, des enroulements métalliques ou des rainures à faces verticales dans lesquelles vient se loger l'extrémité de fibres optiques.

Un premier procédé de fabrication (cf. I. Milosenic et al. "Polyimide Enables High Lead Count TAB", Semiconductor International, October 1988, Cahners Publishing Company) du ou des tenons comporte principalement les étapes suivantes:
- dépôt sur le plan de contact **2a** du premier substrat d'un film de résine polyimide photosensible négative d'environ 20 µm d'épaisseur ou plus;
- illumination du film de résine photosensible par projection à travers un masque approprié et à l'aide d'un "stepper";
- développement de la résine;
- dissolution de la résine située à l'emplacement du ou des tenons;
- évaporation d'un film métallique sur ledit emplacement;
- croissance galvanique d'une couche métallique sur ledit film métallique; et
- dissolution de la résine restante.

Conformément au procédé de l'invention, ces étapes s'effectuent sur le plan de contact **2a** du premier substrat.

Ladite croissance s'effectue sur ledit premier substrat de telle manière que le ou les tenons ainsi réalisés à la surface du premier substrat s'emboîtent dans la ou l'une des mortaises. La croissance de la couche métallique pour former le tenon est réalisée sur une hauteur de l'ordre de 20 µm ou plus.

Un autre procédé de fabrication du ou des tenons est décrit, par exemple, dans la publication "Accuracy limits and potential applications of the LIGA technique in integrated optics", D. Münchmeyer et al., SPIE Volume 803, 2-3 April 1987, The Hague.

Les seconds moyens de positionnement **5** de type femelle, à savoir: une ou, de préférence, deux mortaises sont réalisées à l'aide d'une technique d'attaque planaire sur le second substrat **3**, lequel est, par exemple, découpé dans un monocristal de silicium.

La ou les mortaises réalisées sur le second substrat sont obtenues à partir, par exemple, de l'un des procédés décrits dans la demande de brevet français No 82 02971.

Les procédés d'attaque cristallographique décrits dans ce brevet français No 82 02971 consistent de façon générale en une attaque chimique qui est préférentielle dans une certaine direction liée au plan cristallin. Les procédés d'attaque chimique de l'art antérieur sont utilisés pour la réalisation de sillons en forme de "V" dans lesquels viennent se loger l'extrémité de fibres optiques.

Selon l'un de ces procédés, un masque d'attaque chimique est réalisé sur le second substrat, à l'aide des étapes suivantes:
- on dépose une couche de résine photosensible sur la surface devant recevoir un masque d'attaque chimique;
- on réalise sur la couche de résine photosensible un photomasque ayant un schéma prédéterminé avec une partie transparente à la lumière et une partie opaque à la lumière;
- on expose le photomasque à la lumière et on développe le schéma;
- on enlève la partie transparente du photomasque et la couche de résine photosensible correspondante.
La mortaise est obtenue par attaque chimique du substrat découvert.

Conformément au procédé de l'invention, le masque d'attaque chimique est réalisé sur le plan de contact **3a** du second substrat de manière que la ou les mortaises ainsi réalisées s'imbriquent dans le ou les tenons respectifs. De plus, la ou les surfaces d'appui **5a** de la ou des mortaises font, de préférence, un angle de ± 45° par rapport à l'axe longitudinal X-X du second substrat. L'attaque chimique pour former la ou les mortaises est effectuée sur une profondeur de l'ordre de 20 µm ou plus.

Selon un deuxième procédé de fabrication décrit dans la demande de brevet français cité ci-dessus:
- on polit le plan de contact **3a** du second substrat;
- on forme une couche de silice SiO₂ sur la surface polie;
- on réalise une couche de résine photosensible sur la couche de silice SiO₂ ou Si₃N₄;
- on réalise un masque d'attaque chimique ayant un schéma prédéterminé sur la couche de résine photosensible;
- on expose le masque d'attaque chimique à la lumière et on enlève la partie exposée;
- on enlève la partie de la couche de silice correspondant à la partie exposée du masque d'attaque chimique;
- on soumet le substrat avec le schéma à une attaque chimique pour former une ou deux mortaises.

Conformément au procédé de l'invention, la surface polie sur laquelle est réalisé le masque d'attaque chimique est le plan de contact **3a** du second substrat de manière que la ou les mortaises ainsi réalisées soient susceptibles de s'imbriquer dans les tenons respectifs. De plus, la ou les surfaces d'appui **5a** de la ou des mortaises font un angle de ± 45° par rapport à l'axe longitudinal X-X du second substrat. L'attaque chimique pour former chaque mortaise est réalisée sur une épaisseur de l'ordre de 20 µm ou plus.

Il ressort du procédé de l'invention que l'axe de symétrie de chaque tenon, et par suite la position du substrat, est défini de façon unique dans le plan du premier substrat. En effet, bien que les procédés de réalisation des tenons ne permettent pas d'obtenir des tenons de dimensions strictement pré-établies, la position des axes de symétrie des tenons reste quant à elle parfaitement définie.

Il ressort également du procédé de l'invention que la position du plan de symétrie vertical des mortaises est également définie de façon unique par rapport à l'axe latéral Y-Y.

Une imprécision de la position des surfaces d'appui des mortaises selon l'axe longitudinal X-X est due au fait que l'attaque chimique dans la direction longitudinale X-X n'est pas autolimitée puisque dépendante de paramètres telles la durée de l'attaque chimique et la concentration des bains chimiques. Toutefois, du fait que cette dépendance est parfaitement connue par l'homme du métier, les procédés de réalisation des mortaises permettent d'obtenir des surfaces d'appui **5a** dont la position selon l'axe longitudinal X-X peut être strictement pré-établie.

Il résulte de ce qui précède que l'axe de symétrie des premiers moyens de positionnement est, après positionnement du premier substrat sur le second, dans le plan de symétrie vertical des seconds moyens de positionnement.

La figure 1 montre le dispositif micromécanique de positionnement d'un composant optique intégré plan sur un substrat plan de l'art antérieur décrit par E.-J. Murphy et cité dans le préambule de la description.

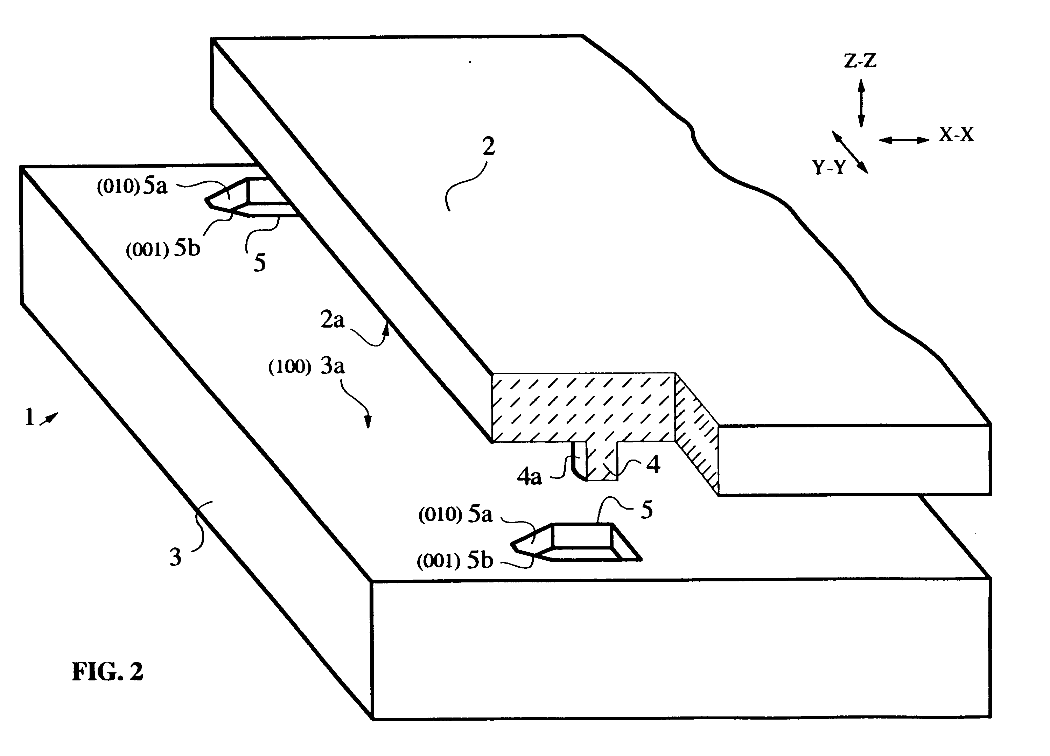

Le dispositif micromécanique de positionnement obtenu par le procédé de l'invention est représenté à la figure 2.

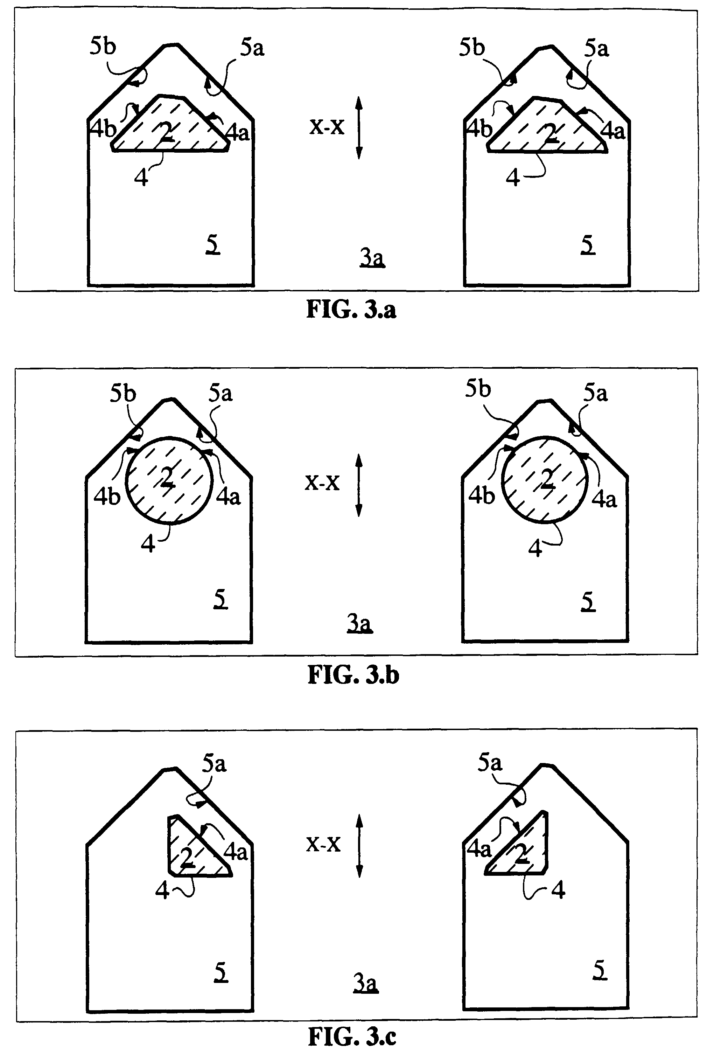

L'ensemble des trois axes orthogonaux X-X, Y-Y, Z-Z est symbolisé par des flèches sur les figures 2 et 3.

L'invention porte également sur un dispositif micromécanique de positionnement d'un premier substrat **2** et d'un second substrat **3**, le premier substrat comprenant des premiers moyens de positionnement **4** de type mâle, lesquels comportent au moins une surface d'appui **4a** perpendiculaire au plan du premier substrat, et le second substrat comprenant des seconds moyens de positionnement **5** de type femelle, les premiers moyens de positionnement étant disposés face aux seconds moyens de positionnement.

Conformément à l'invention, le second substrat **3** est découpé dans un monocristal de silicium de telle manière que les indices de Miller du plan cristallin défini par la surface **3a**, ci-après appelée plan de contact, de ce second substrat sont (100). De plus, chacun des seconds moyens de positionnement **5** de type femelle consiste en au moins une mortaise dont au moins une surface d'appui **5a** est perpendiculaire au plan de contact **3a** du second substrat **3** et fait un angle de ± 45° avec l'axe longitudinal X-X du second substrat. De plus, les indices de Miller du plan cristallin défini par la surface d'appui **5a** des seconds moyens de positionnement sont (010).

Dans le cas où les seconds moyens de positionnement **5** de type femelle conporteraient une seconde surface d'appui **5b** également perpendiculaire au plan du second substrat, les indices de Miller du plan cristallin définis par cette seconde surface d'appui des seconds moyens de positionnement sont (001), de manière que ces deux surfaces d'appui soient orthogonales entre elles.

De façon moins spécifique que ce qui vient d'être défini ci-dessus, les indices de Miller de la famille de plans cristallins des surfaces d'appui des seconds moyens de positionnement sont {100}.

Toujours selon l'invention, chacun des premiers moyens de positionnement **4** de type mâle consiste en au moins un tenon dont au moins une surface d'appui **4a** est perpendiculaire au plan de contact **2a** du premier substrat **2** et est parallèle à au moins une des surfaces d'appui **5a** des seconds moyens de positionnement, de manière à définir une position latérale unique de l'un des substrats, l'autre étant pris comme référence, par la formation, de préférence, d'un jeu **4a**, **5a** ou **4b**, **5b** ou de deux jeux **4a**, **5a** et **4b**, **5b** de surfaces d'appui conjuguées.

En d'autres termes, dans le dispositif micromécanique de positionnement obtenu, la position latérale (c'est-à-dire transversalement par rapport à l'axe longitudinal X-X) de l'un des substrats, l'autre substrat étant pris comme référence, est unique. Une telle position est définie par au moins un jeu de surfaces d'appui conjuguées **4a**, **5a**, **4b, 5b** appartenant aux premier et second moyens de positionnement.

De plus, l'un des plans de contact **2a** est maintenu, par tout moyen approprié, sur le plan de contact restant **3a**, de manière à définir une position verticale unique et à supprimer les mouvements de roulis, de tangage et de lacet de l'un des substrats, l'autre étant pris comme référence.

En d'autres termes, dans un tel dispositif, la position verticale (c'est-à-dire le long de l'axe vertical Z-Z) de ce même substrat, l'autre substrat étant pris comme référence, est unique. Une telle position est définie par les plans de contact conjugués **2a, 3a** des premier et second substrats.

Ces plans de contact conjugués **2a, 3a** permettent donc de supprimer les mouvements de roulis, de tangage et de lacet de ce même substrat.

Les surfaces d'appui conjuguées et les plans de contact définis ci-dessus sont représentés soit à la figure 2, soit aux figures 3.a à 3.c.

Les figures 3.a à 3.c montrent différents modes de réalisation de l'élément essentiel de l'invention que constitue la structure du type "tenon-mortaise" **4,5**.

Dans une première réalisation (fig. 3.a) les deux tenons 4 réalisés sur le premier substrat **2** sont triangulaires et comportent chacun deux surfaces d'appui planes **4a, 4b**. Les deux mortaises **5** obtenues sur le second substrat **3** ont une base, par exemple rectangulaire ou carrée, prolongée par un triangle isocèle dont les deux côtés égaux constituent, pour chaque mortaise, deux surfaces d'appui planes **5a, 5b**. Après positionnement du premier substrat sur le second substrat, ou encore lorsque les plans de contact **2a, 3a** des substrats respectifs sont maintenus dans un même plan, les surfaces d'appui conjuguées **4a, 5a; 4b, 5b** définissent deux jeux de surfaces d'appui conjuguées.

Dans une deuxième réalisation (fig. 3.b) les deux tenons **4** réalisés sur le premier substrat 2 sont cylindriques et comportent chacun deux surfaces d'appui bombées **4a, 4b**. Les deux mortaises **5** obtenues sur le second substrat 3 sont identiques à celles décrites précédemment. Après positionnement du premier substrat sur le second substrat, les surfaces d'appui conjuguées sont en contact entre elles et définissent également deux jeux de surfaces d'appui conjuguées **4a, 5a et 4b, 5b**. Dans le cas présent, les surfaces d'appui conjuguées se limitent en fait à des génératrices perpendiculaires au plan de contact des substrats.

Dans chacune des réalisations précédentes, le nombre de jeux de surfaces d'appui conjuguées **4a, 5a; 4b, 5b**, est fonction, d'une part, du nombre d'éléments du type "tenon-mortaise" réalisés et, d'autre part, de la forme des tenons et des mortaises constituant ces éléments. Le positionnement entre substrats est optimal lorsqu'il n'existe qu'un seul jeu de surfaces d'appui conjuguées, lesdites surfaces étant séparées les unes des autres transversalement par rapport à l'axe longitudinal X-X des substrats. La figure 3.c montre une troisième réalisation de l'élément "tenon-mortaise" comportant un seul jeu de surfaces d'appui conjuguées, séparées les unes des autres transversalement par rapport à l'axe longitudinal X-X.

Compte tenu de ce qui précède, il est clair que les réalisations de l'élément "tenon-mortaise" ne se limitent pas à celles présentées ci-dessus. De manière générale, les moyens de positionnement consistent en au moins un tenon, par exemple en forme de demi-cylindre, comportant au moins une surface d'appui plane ou bombée, combiné à une mortaise comportant au moins une surface d'appui plane ou bombée.

Les surfaces d'appui des seconds moyens de positionnement sont séparées les unes des autres transversalement et/ou longitudinalement par rapport à l'axe longitudinal X-X et/ou transversal Y-Y, respectivement.

Bien que la présente invention ait été décrite dans le cadre d'exemples de réalisation particuliers, il est clair, cependant qu'elle est susceptible de modifications ou de variantes sans sortir de son domaine.

En particulier, le second substrat peut encore être découpé dans un monocristal de silicium de telle manière que les indices de Miller du plan cristallin défini par le plan de contact de ce second substrat sont, par exemple, (110).

Les indices de Miller des plans cristallins définis par les surfaces d'appui des seconds moyens de positionnement de type femelle, peuvent encore être {111}.

## Revendications

1. Procédé pour positionner un premier substrat (2) sur un second substrat (3), comprenant les étapes consistant à:
- réaliser sur le premier substrat (2) au moins deux premiers moyens de positionnement (4) de type mâle, faisant tous deux saillie d'une face principale plane (2a) dudit premier substrat en étant situés de part et d'autre de l'axe longitudinal du substrat, chacun desdits premiers moyens de positionnement comportant au moins une face (4a) perpendiculaire à ladite face principale dudit premier substrat,
- réaliser sur le second substrat (3) au moins deux des seconds moyens de positionnement (5) de type femelle, ménagés tous deux dans une face principale plane (3a) dudit second substrat en étant situés de part et d'autre de l'axe longitudinal (X-X) dudit substrat, et
- disposer ledit premier substrat (2) sur ledit second substrat (3) de manière à faire s'accoupler les moyens de positionnement des deux substrats, le procédé étant **caractérisé en ce que**:
- les premiers (4) moyens de positionnement de type mâle sont réalisés par croissance galvanique d'un matériau;
- les seconds (5) moyens de positionnement de type femelle sont réalisés par des procédés photolithographiques;
- chaque second moyen de positionnement (5) de type femelle consiste en une mortaise présentant au moins une surface d'appui (5a, 5b) perpendiculaire à ladite face principale plane (3a) dudit second substrat (3) et faisant un angle de 45° avec l'axe longitudinal (X-X) dudit second substrat;
- chaque premier moyen de positionnement (4) de type mâle consiste en un tenon présentant au moins une surface d'appui (4a,4b) constituée par ladite face perpendiculaire à ladite face principale plane (2a) dudit premier substrat (2), ladite surface d'appui faisant un angle de 45° avec l'axe longitudinal dudit premier substrat, lesdites surfaces d'appui desdits tenons et desdites mortaises constituant ainsi au moins un jeu de surfaces d'appui conjuguées (4a, 5a ou 4b, 5b) permettant, lorsqu'elles sont amenées et maintenues en contact les unes avec les autres, de faire se coïncider les axes longitudinaux des deux substrats et de définir ainsi une position latérale unique de l'un des substrats par rapport à l'autre pris comme référence tout en supprimant tout mouvement possible de rotation d'un des substrats par rapport à l'autre autour d'un axe perpendiculaire à leurs faces principales planes; et
- chaque tenon (4) est dimensionné par rapport à la mortaise (5) correspondante de façon à permettre l'amenée et le maintien étroit l'une contre l'autre desdites faces principales planes (2a, 3a), dites alors plans de contact, desdits premier et second substrats, de manière à définir une position unique de l'un des substrats par rapport à l'autre pris comme référence dans la direction perpendiculaire auxdits plans de contact et à supprimer tout mouvement possible de rotation de l'un des substrats par rapport à l'autre autour de tout axe s'étendant dans lesdits plans de contact desdits substrats, de sorte que, lorsque lesdites surfaces d'appui conjuguées desdits tenons et mortaises ainsi que lesdits plans de contact desdits substrats sont maintenus les uns contre les autres, ledit premier substrat se trouve dans ledit positionnement prédéterminé sur ledit second substrat.

2. Procédé selon la revendication 1, dans lequel:
- le premier substrat (2) est en verre ou en LiNbO₃ et
- le second substrat (3) est en silicium monocristallin, découpé de façon que le plan de contact (3a) soit orienté suivant le plan cristallin dont les indices de Miller sont (100) ou (110).

3. Procédé selon la revendication 2, dans lequel les indices de Miller de la famille de plans cristallins suivant lesquels sont orientées les surfaces d'appui (5a, 5b) des seconds moyens de positionnement (5) de type femelle sont {100} ou {111}.

4. Procédé selon la revendication 3, dans lequel:
- les indices de Miller de la famille de plans cristallins suivant lesquels sont orientées les surfaces d'appui (5a, 5b) des seconds moyens de positionnement (5) de type femelle sont {100} et
- les indices de Miller du plan cristallin suivant lequel est orientée l'une (5a) des surfaces d'appui des seconds moyens de positionnement (5) de type femelle sont (010), les indices de Miller du plan cristallin suivant lequel est orientée l'autre surface d'appui (5b), si elle existe, sont (001).

5. Ensemble de deux substrats (2, 3) équipés de moyens micromécaniques pour positionner de manière prédéterminée le premier (2) desdits substrats sur le second (3), ledit premier substrat (2) comprenant au moins deux premiers moyens de positionnement (4) de type mâle faisant tous deux saillie d'une face principale plane (2a) dudit premier substrat en étant situés de part et d'autre de l'axe longitudinal du substrat, chacun desdits premiers moyens de positionnement comportant au moins une face (4a) perpendiculaire à ladite face principale dudit premier substrat, et ledit second substrat (3) comprenant au moins deux seconds moyens de positionnement (5) de type femelle ménagés tous deux dans une face principale plane (3a) dudit second substrat en étant situés de part et d'autre de l'axe longitudinal (X-X) dudit substrat, lesdits premiers moyens de positionnement de type mâle et lesdits seconds moyens de positionnement de type femelle étant respectivement agencés sur lesdits premier et second substrats de façon à pouvoir être accouplés les uns aux autres en vue d'assurer ledit positionnement prédéterminé dudit premier substrat sur le second, **caractérisé en ce que** :
- les premiers (4) moyens de positionnement de type mâle sont réalisés par croissance galvanique d'un matériau;
- les seconds (5) moyens de positionnement de type femelle sont réalisés par des procédés photolithographiques;
- chaque second moyen de positionnement (5) de type femelle consiste en une mortaise présentant au moins une surface d'appui (5a, 5b) perpendiculaire à ladite face principale plane dudit second substrat (3) et faisant un angle de 45° avec l'axe longitudinal (X-X) dudit second substrat;
- chaque premier moyen de positionnement (4) de type mâle consiste en un tenon présentant au moins une surface d'appui (4a, 4b) constituée par ladite face perpendiculaire à ladite face principale plane (2a) dudit premier substrat (2), ladite surface d'appui faisant un angle de 45° avec l'axe longitudinal dudit premier substrat, lesdites surfaces d'appui desdits tenons et desdites mortaises constitutant ainsi au moins un jeu de surfaces d'appui conjuguées (4a, 5a ou 4b, 5b) permettant, lorsqu'elles sont amenées et maintenues en contact les unes avec les autres, de faire se coïncider les axes longitudinaux des deux substrats et de définir ainsi une position latérale unique de l'un des substrats par rapport à l'autre pris comme référence tout en supprimant tout mouvement possible de rotation d'un des substrats par rapport à l'autre autour d'un axe perpendiculaire à leurs faces principales planes; et
- chaque tenon (4) est dimensionné par rapport à la mortaise (5) correspondante de façon à permettre l'amenée et le maintien étroit l'une contre l'autre desdites faces principales planes (2a, 3a), dites alors plans de contact, desdits premier et second substrats, de manière à définir une position unique de l'un des substrats par rapport à l'autre pris comme référence dans la direction perpendiculaire auxdits plans de contact et à supprimer tout mouvement possible de rotation de l'un des substrats par rapport à l'autre autour de tout axe s'étendant dans lesdits plans de contact desdits subsrtrats, de sorte que, lorsque lesdites surfaces d'appui conjuguées desdits tenons et mortaises ainsi que lesdits plans de contact desdits substrats sont maintenus les uns contre les autres, ledit premier substrat se trouve dans ledit positionnement prédéterminé sur ledit second substrat.

6. Ensemble selon la revendication 5, dans lequel:
- le premier substrat (2) est en verre ou en LiNbO₃ et
- le second substrat (3) est en silicium monocristallin, découpé de façon que le plan de contact (3a) soit orienté suivant le plan cristallin dont les indices de Miller sont (100) ou (110).

7. Ensemble selon la revendication 6, dans lequel les indices de Miller de la famille de plans cristallins suivant lesquels sont orientées les surfaces d'appui (5a, 5b) des seconds moyens de positionnement (5) de type femelle sont {100} ou {111}.

8. Ensemble selon la revendication 7, dans lequel:
- les indices de Miller de la famille de plans cristallins suivant lesquels sont orientées les surfaces d'appui (5a, 5b) des seconds moyens de positionnement (5) de type femelle sont {100} et
- les indices de Miller du plan cristallin suivant lequel est orientée l'une (5a) des surfaces d'appui des seconds moyens de positionnement (5) de type femelle sont (010), les indices de Miller du plan cristallin suivant lequel est orientée l'autre surface d'appui (5b), si elle existe, sont (001).

## Patentansprüche

1. Verfahren zum Positionieren eines ersten Substrats (2) auf einem zweiten Substrat (3), umfassend die Schritte
- Realisieren mindestens zweier erster Positioniermittel (4) vom Auskragtyp auf dem ersten Substrat (2), welche beide von einer ebenen Hauptfläche (2a) des ersten Substrats auskragen und sich beidseits der Substratlängsachse befinden, welche ersten Positioniermittel jedes mindestens eine senkrecht zu der Hauptebene des ersten Substrats verlaufende Seite (4a) aufweisen,
- Realisieren mindestens zweier zweiter Positioniermittel (5) vom Einsenktyp auf dem zweiten Substrat, beide in eine ebene Hauptfläche (3a) des zweiten Substrats eingearbeitet und beidseits der Längsachse (X-X) des Substrats befindlich, und
- Anordnen des ersten Substrats (2) auf dem zweiten Substrat (3) derart, daß sich die Positioniermittel beider Substrate kuppeln lassen, welches Verfahren **dadurch gekennzeichnet** ist,
- daß die ersten (4) Positioniermittel vom Auskragtyp durch galvanisches Aufwachsen eines Materials realisiert werden,
- daß die zweiten (5) Positioniermittel vom Einsenktyp mittels photolithographischer Verfahren realisiert werden,
- daß jedes zweite Positioniermittel (5) vom Einsenktyp aus einer Ausnehmung mit mindestens einer Anlagefläche (5a, 5b) senkrecht zu der ebenen Hauptfläche (3a) des zweiten Substrats (3) und einen Winkel von 45° mit der Längsachse (X-X) des zweiten Substrats bildend besteht,
- daß jedes erste Positioniermittel (4) vom Auskragtyp aus einem Zapfen mit mindestens einer Anlagefläche (4a, 4b) besteht, gebildet von der zu der ebenen Hauptfläche (2a) des ersten Substrats (2) senkrechten Seite, welche Anlagefläche einen Winkel von 45° mit der Längsachse des ersten Substrats bildet, welche Anlageflächen der Zapfen und Ausnehmungen derart mindestens einen Satz von zugeordneten Anlageflächen (4a, 5a oder 4b, 5b) bilden, was es erlaubt, wenn sie in Kontakt miteinander gebracht und gehalten werden, die Längsachsen der beiden Substrate koinzident zu machen und auf diese Weise eine einzige seitliche Position des einen Substrats relativ zu dem als Referenz verwendeten andern zu definieren unter Unterdrückung jeglicher möglicher Verdrehbewegung eines der Substrate relativ zu dem andern um eine zu ihren ebenen Hauptflächen senkrechte Achse, und
- daß jeder Zapfen (4) relativ zu der entsprechenden Ausnehmung (5) so dimensioniert ist, daß das enge Anlegen und Halten einer der ebenen Hauptflächen (2a, 3a) des ersten und zweiten Substrats an der anderen, welche somit als Kontaktebenen bezeichnet werden, ermöglicht wird, um so eine einzige Position eines Substrats zu dem als Referenz verwendeten anderen in Richtung senkrecht zu den Kontaktebenen zu definieren und um jegliche mögliche Verdrehung des einen Substrats relativ zu dem anderen um jede sich in den Kontaktebenen der Substrate erstreckende Achse zu unterbinden, derart, daß dann, wenn die zugeordneten Anlageflächen der Zapfen und Ausnehmungen wie auch die Kontaktebenen der Substrate gegeneinander gehalten sind, das erste Substrat sich in der vorbestimmten Positionierung auf dem zweiten Substrat befindet.

2. Verfahren nach Anspruch 1, bei dem
- das erste Substrat (2) aus Glas oder LiNbO₃ besteht und
- das zweite Substrat aus monokristallinem Silizium besteht, derart geschnitten, daß die Kontaktebene (3a) gemäß der Kristallebene mit den Miller-Indices (100) oder (110) orientiert ist.

3. Verfahren nach Anspruch 2, bei dem die Miller-Indices der Familie der Kristallebenen, gemäß denen die Anlageflächen (5a, 5b) der zweiten Positioniermittel (5) vom Einsenktyp orientiert sind, (100) oder (111) sind.

4. Verfahren nach Anspruch 3, bei dem
- die Miller-Indices der Familie von Kristallebenen, gemäß denen die Anlageflächen (5a, 5b) der zweiten Positioniermittel (5) vom Einsenktyp orientiert sind, (100) sind und
- die Miller-Indices der Kristallebene, gemäß der die eine (5a) der Anlageflächen der zweiten Positioniermittel (5) vom Einsenktyp orientiert ist, (010) sind, während die Miller-Indices der Kristallebene, gemäß der die andere Anlagefläche, falls sie existiert, orientiert ist, (001) sind.

5. Baugruppe zweier Substrate (2, 3), versehen mit mikromechanischen Mitteln zum vorbestimmten Positionieren des ersten Substrats (2) auf dem zweiten (3), welches erste Substrat (2) mindestens zwei erste Positioniermittel (4) vom Auskragtyp umfaßt, welche beide von einer ebenen Hauptfläche (2a) des ersten Substrats auskragen und sich beidseits der Substratlängsachse befinden, welche ersten Positioniermittel jedes mindestens eine senkrecht zu der Hauptebene des ersten Substrats verlaufende Seite (4a) aufweisen, und das zweite Substrat (3) mindestens zwei zweite Positioniermittel (5) vom Einsenktyp umfaßt, beide in eine ebene Hauptfläche (3a) des zweiten Substrats eingearbeitet und beidseits der Längsachse (X-X) des Substrats befindlich, welche ersten Positioniermittel vom Auskragtyp und zweiten Positioniermittel vom Einsenktyp jeweils auf dem ersten bzw. zweiten Substrat derart ausgebildet sind, daß sie miteinander kuppelbar sind, um die vorbestimmte Positionierung des ersten Substrats auf dem zweiten sicherzustellen, **dadurch gekennzeichnet**,
- daß die ersten (4) Positioniermittel vom Auskragtyp durch galvanisches Aufwachsen eines Materials realisiert sind,
- daß die zweiten (5) Positioniermittel vom Einsenktyp mittels photolithographischer Verfahren realisiert,
- daß jedes zweite Positioniermittel (5) vom Einsenktyp aus einer Ausnehmung mit mindestens einer Anlagefläche (5a, 5b) senkrecht zu der ebenen Hauptfläche (3a) des zweiten Substrats (3) und einen Winkel von 45° mit der Längsachse (X-X) des zweiten Substrats bildend besteht,
- daß jedes erste Positioniermittel (4) vom Auskragtyp aus einem Zapfen mit mindestens einer Anlagefläche (4a, 4b) besteht, gebildet von der zu der ebenen Hauptfläche (2a) des ersten Substrats (2) senkrechten Seite, welche Anlagefläche einen Winkel von 45° mit der Längsachse des ersten Substrats bildet, welche Anlageflächen der Zapfen und Ausnehmungen derart mindestens einen Satz von zugeordneten Anlageflächen (4a, 5a oder 4b, 5b) bilden, was es erlaubt, wenn sie in Kontakt miteinander gebracht und gehalten werden, die Längsachsen der beiden Substrate koinzident zu machen und auf diese Weise eine einzige seitliche Position des einen Substrats relativ zu dem als Referenz verwendeten andern zu definieren unter Unterdrückung jeglicher möglicher Verdrehbewegung eines der Substrate relativ zu dem andern um eine zu ihren ebenen Hauptflächen senkrechte Achse, und
- daß jeder Zapfen (4) relativ zu der entsprechenden Ausnehmung (5) so dimensioniert ist, daß das enge Anlegen und Halten einer der ebenen Hauptflächen (2a, 3a) des ersten und zweiten Substrats an der anderen, welche somit als Kontaktebenen bezeichnet werden, ermöglicht wird, um so eine einzige Position eines Substrats zu dem als Referenz verwendeten anderen in Richtung senkrecht zu den Kontaktebenen zu definieren und um jegliche mögliche Verdrehung des einen Substrats relativ zu dem anderen um jede sich in den Kontaktebenen der Substrate erstreckende Achse zu unterbinden, derart, daß dann, wenn die zugeordneten Anlageflächen der Zapfen und Ausnehmungen wie auch die Kontaktebenen der Substrate gegeneinander gehalten sind, das erste Substrat sich in der vorbestimmten Positionierung auf dem zweiten Substrat befindet.

6. Baugruppe nach Anspruch 5, bei der
- das erste Substrat (2) aus Glas oder LiNbO₃ besteht und
- das zweite Substrat aus monokristallinem Silizium besteht, derart geschnitten, daß die Kontaktebene (3a) gemäß der Kristallebene mit den Miller-Indices (100) oder (110) orientiert ist.

7. Baugruppe nach Anspruch 6, bei der die Miller-Indices der Familie der Kristallebenen, gemäß denen die Anlageflächen (5a, 5b) der zweiten Positioniermittel (5) vom Einsenktyp orientiert sind, (100) oder (111) sind.

8. Baugruppe nach Anspruch 7, bei der
- die Miller-Indices der Familie von Kristallebenen, gemäß denen die Anlageflächen (5a, 5b) der zweiten Positioniermittel (5) vom Einsenktyp orientiert sind, (100) sind und
- die Miller-Indices der Kristallebene, gemäß der die eine (5a) der Anlageflächen der zweiten Positioniermittel (5) vom Einsenktyp orientiert ist, (010) sind, während die Miller-Indices der Kristallebene, gemäß der die andere Anlagefläche, falls sie existiert, orientiert ist, (001) sind.

## Claims

1. Method of positioning a first substrate (2) on a second substrate (3), including steps comprising:
• producing on the first substrate (2) at least two first positioning means (4) of the male type, both projecting from a principal plane face (2a) of said first substrate, and being situated on either side of the longitudinal axis of the substrate, each of said first positioning means comprising at least one face perpendicular to the principal face of said first substrate, and
• producing on the second substrate (3) at least two of the second positioning means (5) of the female type, both arranged in a principal plane face (3a) of said second substrate and being situated on either side of the longitudinal axis (X-X) of said substrate, and
• disposing said first substrate (2) on said second substrate (3) so as to cause the positioning means of the two substrates to be coupled, the method being characterised in that:
• the first (4) positioning means of the male type are produced by electrolytic growth of a material;
• the second (5) positioning means of the female type are produced by photolithographic procedures;
• each second positioning means (5) of the female type comprises a mortise having at least one support surface (5a, 5b) perpendicular to said principal planar face (3a) of said second substrate (3), forming an angle of 45° with the longitudinal axis (X-X) of said second substrate;
• each first positioning means (4) of the male type comprises a tenon having at least one support surface (4a, 4b) constituted by said face perpendicular to said principal planar face (2a) of said first substrate (2), said support surface forming an angle of 45° with the longitudinal axis of said first substrate, the said support surfaces of said tenons and of said mortises thus constituting at least one set of conjoined support surfaces (4a, 5a or 4b, 5b) enabling, when they are brought and held in contact with one another, the longitudinal axes of the two substrates to coincide, and thus to define a single lateral position of one of the substrates with respect to the other, taken as a reference, eliminating all possible rotational movement of one of the substrates relative to the other about an axis perpendicular to their principal planar faces; and
• each tenon (4) is dimensioned with respect to the corresponding mortise (5) so as to permit said planar principal faces of said first and second substrates to be brought and held close against one another, being then termed planes of contact, so as to define a single position of one of the substrates relative to the other, taken as a reference, in the direction perpendicular to said planes of contact, and to eliminate all possible rotational movement of one of the substrates with respect to the other about any axis extending in the said planes of contact of said substrates, so that, when said conjoined support surfaces of said mortises and tenons and the said planes of contact of the said substrates are held against one another, said first substrate is located in said predetermined position on said second substrate.

2. Method according to claim 1, in which:
• the first substrate (2) is made of glass or of LiNbO₃ and
• the second substrate (3) is made of monocrystalline silicon, cut so that the plane of contact (3a) is oriented with regard to the crystalline plane of which the Millerian indices are (100) or (110).

3. Method according to claim 2, in which the Millerian indices of the family of crystalline planes according to which the support surfaces (5a, 5b) of the second positioning means (5) of the female type are oriented, are (100) or (111).

4. Method according to claim 3, in which:
• the Millerian indices of the family of crystalline planes according to which the support surfaces (5a, 5b) of the second positioning means (5) of the female type are oriented are (100), and
• the Millerian indices of the crystalline plane according to which one (5a) of the support surfaces of the second positioning means (5) of the female type are (010), the Millerian indices of the crystalline p[lane according to which the other support surface (5b) is oriented, if it exists, are (001).

5. Assembly of two substrates (2, 3) supplied with micromechanical means for positioning in a predetermined manner the first (2) of said substrates on the second (3), said first substrate (2) comprising at least two first positioning means (4) of the male type, both projecting from a principal planar face (2a) of said first substrate, being situated on either side of the longitudinal axis of the substrate, each of said first positioning means comprising at least one face (4a) perpendicular to said principal face of said first substrate, and said second substrate (3) comprising at least two second positioning means (5) of the female type, both arranged in a principal planar face (3a) of said second substrate, and being situated on either side of the longitudinal axis (X-X) of said substrate, said first positioning means of the male type and said second positioning means of the female type being respectively disposed on said first and second substrates so as to be capable of being coupled to one another with a view to ensuring said predetermined positioning of said first substrate on the second, characterised in that:
• the first (4) positioning means of the male type is produced by electrolytic growth of a material;
• the second (5) positioning means of the female type is produced by photolithographic processes;
• each second positioning means (5) of the female type comprises a mortise having at least one support surface (5a, 5b) perpendicular to said principal planar face of said second substrate (3) and forming an angle of 45° with the longitudinal axis (X-X) of said second substrate;
• each first positioning means (4) of the male type comprises a tenon constituted by the said face perpendicular to the said principal planar face (2a) of said first substrate (2), said support surface forming an angle of 45° with the longitudinal axis of said first substrate, said support surfaces of said tenons and of said mortises constituting therefore at least a set of conjoined support surfaces (4a, 5a or 4b, 5b) enabling, when they are brought into and held in contact with one another, the longitudinal axes of the two substrates to coincide, thus defining a single lateral position of one of the substrates with respect to the other, taken as a reference, while eliminating all possible rotational movement of one of the substrates with respect to the other about an axis perpendicular to their principal planar faces; and
• each tenon (4) is dimensioned with respect to the corresponding mortise (5) so as to enable said principal planar faces (2a, 3a) of said first and second substrates to be brought into and held in close contact with one another, then being termed contact planes, so as to define a single position of one of the substrates with respect to the other, taken as a reference, in the direction perpendicular to said contact planes, and to eliminate all possible rotational movement of one of the substrates with respect to the other about any axis extending in the said contact planes of said substrates, so that, when said conjoined support surfaces of said tenons and mortises and said contact planes of said substrates are held against one another, said first substrate is in said predetermined positioning on said second substrate.

6. Assembly according to claim 5, in which:
• the first substrate (2) is made of glass or of LiNbO₃ and
• the second substrate (3) is made of monocrystalline silicon, cut so that the contact p[lane (3a) is situated in accordance with the crystalline plane whose Millerian indices are (100) or (110).

7. Assembly according to claim 6, in which the Millerian indices of the family of crystalline planes according to which the support surfaces (5a, 5b) of the second positioning means (5) of the male type are oriented, are (100) or (111).

8. Assembly according to claim 7, in which:
• the Millerian indices of the family of crystalline planes according to which the support surfaces (5a, 5b) of the second positioning means (5) of the female type are (100), and
• the Millerian indices of the crystalline plane according to which one (5a) of the support surfaces of the second positioning means (5) of the female type are (010), and the Millerian indices of the crystalline plane according to which the other support surface (5b), if it exists, are (001).
